**Europäisches Patentamt**

**European Patent Office**

**Office européen des brevets**

(19)

(11) **EP 1 440 934 A1**

(12) **EUROPÄISCHE PATENTANMELDUNG**

(43) Veröffentlichungstag:
28.07.2004 Patentblatt 2004/31

(51) Int Cl.$^7$: **C01B 6/21**

(21) Anmeldenummer: **04000966.4**

(22) Anmeldetag: **19.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **22.01.2003 DE 10302262**

(71) Anmelder: **Chemetall GmbH**
**60487 Frankfurt (DE)**

(72) Erfinder:
• **Hauk, Dieter**
  **61169 Friedberg (DE)**
• **Wietelmann, Ulrich, Dr.**
  **61381 Friedrichsdorf (DE)**

(74) Vertreter: **Uppena, Franz, Dr. et al**
**Dynamit Nobel AG**
**Patentabteilung,**
**Postfach 1261**
**53839 Troisdorf (DE)**

(54) **Verfahren zur Herstellung von Lithiumborhydrid**

(57) Beschrieben wird ein Verfahren zur Herstellung von Lithiumborhydrid durch Reaktion von Lithiumhydrid mit Bortrifluorid, bei dem Lithiumhydrid mit Bortrifluorid in einem Molverhältnis LiH : BF$_3$ > 4,1 : 1 umgesetzt wird, wobei die Umsetzung in einem etherischen Lösungsmittel, dessen Siedepunkt bei Normaldruck mindestens 50 °C beträgt, und bei Temperaturen von mindestens 10°C durchgeführt wird.

**Beschreibung**

Die Erfindung betrifft ein Verfahren zur Herstellung von Lithiumborhydrid.

Zur Herstellung von $LiBH_4$ sind eine Reihe unterschiedlicher Verfahren vorgeschlagen worden. Die direkte Bildung aus den Elementen (das heißt aus metallischem Lithium und Bor sowie Wasserstoff) ist im Prinzip möglich, erfordert aber extreme Bedingungen (150 at $H_2$-Druck, 650 °C). Solche Bedingungen erfordern außergewöhnlich teure Apparate; zudem ist elementares Bor nicht billig verfügbar.

Eine Herstellmöglichkeit geht von technisch in Großmengen verfügbaren Borhydriden $MBH_4$ (M = Na, K) aus. Die Umwandlung zum $LiBH_4$ erfolgt "metathetisch", das heißt durch doppelte Umsetzung mit Lithiumsalzen LiX:

$$MBH_4 \; + \; LiX \quad \xrightarrow{\text{Lösungsmittel}} \quad LiBH_4 \; + \; MX \downarrow$$

X = Cl, Br u.ä.
Lösungsmittel: Ether oder Amine

Der Nachteil dieses Verfahrens besteht darin, dass die Austauschgeschwindigkeit wegen der Unlöslichkeit des Nebenproduktes MX niedrig ist, so dass in der Regel aufwendiges Vermahlen der Komponenten nötig ist. Des weiteren ist die vollständige Abtrennung von M und/oder X schwierig, so dass nur verunreinigte $LiBH_4$-Qualitäten erhalten werden können.

Ein anderes Herstellverfahren bedient sich der intermediären Erzeugung von Diboran.

$$MBH_4 \atop (\text{oder MH}) \quad \xrightarrow[\text{Lösungs-mittel I}]{BX_3} \quad B_2H_6 \uparrow \quad \xrightarrow{+ \text{ LiH/Lösungsmittel II}} \quad LiBH_4$$

X = Halogen, M = Alkalimetall

Das entstehende Diboran entweicht über die Gasphase, wird gegebenenfalls gereinigt und in einem zweiten Reaktor in eine Suspension aus LiH in einem Lösungsmittel (z.B. Diethylether) eingeleitet. Diese Methode erlaubt die Herstellung reiner Lösungen von $LiBH_4$ in einem etherischen Lösungsmittel. Von Nachteil ist die intermediäre Erzeugung gasförmigen Diborans. Dieses hat eine extrem hoher Reaktivität (selbstentzündlich an Luft) und Toxizität (MAK-Wert 0,1 ppm). Die Durchführung des Verfahrens ist deshalb im technischen Maßstab nur unter Einhaltung extrem kontrollierter Bedingungen möglich, und es sind aufwendige Maßnahmen zur Überwachung möglicher Diboranemissionen und zu deren Beseitigung im Störfall erforderlich.

Um diesen Nachteil zu umgehen, kann ein Verfahren gewählt werden, bei dem Diboran ohne Isolierung im selben Reaktionsgefäß weiterreagiert, bzw. gar nicht erst entsteht, z.B. die Umsetzung von Lithiumhydrid mit Bortrifluorid in Diethylether gemäß:

$$4\,LiH \; + \; BF_3 \quad \xrightarrow{Et_2O} \quad LiBH_4 \; + \; 3\,LiF \downarrow$$

Dieses Verfahren kann zwar zu guten Ausbeuten führen, wenn die Reaktion unter Druck durchgeführt wird, jedoch entsteht nach wie vor Diboran als Intermediat, welches sich im Diethylether nur sehr schlecht löst und weshalb nach wie vor mit Diboranemissionen zu rechnen ist. Weiterhin ist der Einsatz von Diethylether als Lösungsmittel wegen dessen hoher Flüchtigkeit und leichten Entzündlichkeit problematisch.

Aus diesem Grunde ist die einfache Herstellung von $LiBH_4$-Lösungen mit besser handhabbaren Lösungsmitteln, z.B. THF oder THF-Derivaten, wünschenswert. Lösungen von $LiBH_4$ in THF sind als solche bekannt, sie werden im allgemeinen durch Auflösen von festem $LiBH_4$ in THF hergestellt.

Elliott (J.R.Elliot et al., J.Am.Chem.Soc. 74 (1952), 5047 bis 5052) behauptet zwar, dass $LiBH_4$-Lösungen auch direkt durch Umsetzung von LiH mit $BF_3$ in THF hergestellt werden könnten. Es werden jedoch keinerlei konkrete Angaben, wie z.B. zu Reaktionsverlauf, Ausbeuten oder Produktreinheit, gemacht. Die im experimentellen Teil (Seite 5050, Table II) beschriebenen Experimente erfolgen im Molverhältnis LiH : $BF_3$ = 2 bis 3,7 : 1 und zeigen relativ schlechte Ausbeuten an Diboran. Über die Entstehung und Ausbeuten an $LiBH_4$ findet sich kein Hinweis.

Fedneva (E.M.Fedneva, Russian J.Inorg.Chem. 4 (1959) 124 bis 125) untersuchte die Reaktion zwischen LiH und $BF_3$ im Molverhältnis 4 : 1 bei ca. 0 °C. Aufgrund der vergleichsweise guten Löslichkeit von LiF wird viel $LiBF_4$ gebildet, während Lithiumborhydrid so gut wir gar nicht entsteht. Daraus schließt Fedneva, dass Lithiumborhydrid nicht, wie von Elliott behauptet, im ersten Schritt gebildet und damit auch isoliert werden könnte, sondern dass zunächst $B_2H_6$ entsteht, das in einem nachfolgenden Schritt mit LiH zu Lithiumborhydrid reagieren kann.

Aufgabe der Erfindung ist es, die Nachteile des Standes der Technik zu überwinden und insbesondere ein Verfahren zur Herstellung einer reinen $LiBH_4$-Lösung mit einem gut handhabbaren, ungiftigen Lösungsmittel bereitzustellen, das sich in einfachen Apparaturen unter üblichen Reaktionsbedingungen und möglichst unter Vermeidung einer Diboran-Zwischenstufe durchführen lässt.

Die Aufgabe wird dadurch gelöst, dass Lithiumhydrid mit Bortrifluorid in einem Molverhältnis LiH : $BF_3$ > 4,1 : 1 umgesetzt wird, wobei die Umsetzung in einem etherischen Lösungsmittel, dessen Siedepunkt bei Normaldruck mindestens 50 °C beträgt, bei Temperaturen von mindestens 10 °C durchgeführt wird.

Überraschend wurde gefunden, dass unter diesen Bedingungen Lithiumborhydrid in sehr guter Ausbeute (≥ 90 %, bezogen auf $BF_3$) und Reinheit (> 95 %) entsteht, und dabei unter Einhaltung geeigneter Bedingungen keinerlei Diboranemissionen auftreten. Außerdem sind die erhaltenen Produktlösungen vollkommen fluoridfrei; es entsteht insbesondere kein Lithiumborfluorid.

Das Lithiumhydrid wird bevorzugt in feinverteilter Form, z.B. als Pulver, eingesetzt. Die mittlere Korngröße $d_{50}$ beträgt bevorzugt maximal 0,5 mm, besonders bevorzugt maximal 0,2 mm. Gut geeignet ist ein gemahlenes und gesiebtes Material, wie es z.B. von Firma Chemetall angeboten wird.

Bevorzugt beträgt das Molverhältnis LiH : $BF_3$ > 4,2 : 1, besonders bevorzugt > 4,4 :1. Bevorzugt wird der Aktivgehalt des eingesetzten LiH bestimmt, um bei der Bestimmung der Einsatzmenge nicht Verunreinigungen mitzuzählen. Das heißt, das Molverhältnis LiH : $BF_3$ bezieht sich auf die Menge reinen Litiumhydrids.

Als Lösungsmittel kommen bevorzugt solche etherische Lösungsmittel zum Einsatz, die Lithiumborhydrid und Diboran gut lösen. Dadurch wird das Entweichen gasförmiger Emissionen durch Komplexbildung verhindert. Bevorzugt sind 5- oder 6-gliedrige cyclische Ether wie Tetrahydrofuran (THF), 2-Methyltetrahydrofuran und Tetrahydropyran oder mehrfunktionelle Ether wie 1,2-Dimethoxyethan oder 1,2-Diethoxyethan. Besonders bevorzugt ist THF. Die etherischen Lösungsmittel können in reiner Form oder im Gemisch eingesetzt werden. Gegebenenfalls können auch Cosolvenzien verwendet werden. Als Cosolvenzien können Kohlenwasserstoffe eingesetzt werden. Das Cosolvenz (z.B. Toluol, Ethylbenzol, Hexan, Heptan) hat im Lösungsmittelgemisch einen Anteil von maximal 50 Gew.-%.

Die Reaktionstemperatur kann zwischen 10 °C und dem Siedepunkt des Lösungsmittels, bzw. Lösungsmittelgemisches liegen. Bevorzugt beträgt die Reaktionstemperatur mindestens 20 °C, ganz besonders bevorzugt liegt die Reaktionstemperatur zwischen 30 und 70 °C. Bevorzugt wird die Reaktion bei Normaldruck oder bei einem leichten Überdruck von bis zu 100 mbar durchgeführt. Dieser leichte Überdruck dient lediglich der Sicherstellung einer Inertgasatmosphäre.

Bevorzugt wird das Verfahren im "Semi-Batch-Betrieb" durchgeführt. Das heißt im Gegensatz zum "Voll-Batch-Betrieb", bei dem alle Rohstoffe auf einmal vorgelegt werden und dann die Reaktion (z.B. auch unter Druck) stattfindet, dass ein Reaktand (LiH) vorgelegt wird und die weitere Reaktionskomponente ($BF_3$) zudosiert wird. Dadurch lässt sich die Reaktion gezielt steuern und lassen sich unsichere Zustände vermeiden.

Das erfindungsgemäße Verfahren kann beispielhaft wie folgt durchgeführt werden:

Das Lithiumhydrid (bevorzugt in Pulverform) wird zunächst in dem wasserfreien etherischen Lösungsmittel oder Lösungsmittelgemisch unter Inertgas suspendiert. Dann wird Bortrifluorid entweder in gasförmiger Form oder als Lösung im für die LiH-Suspendierung verwendeten Lösungsmittel zudosiert. Die Dosierzeit kann - je nach Reaktionsmaßstab, Aktivität (das heißt aktiver Oberfläche) des Lithiumhydrids und Kühlmöglichkeiten - zwischen etwa 0,5 und 15 Stunden, bevorzugt 1 bis 10 Stunden, betragen.

Die exotherme Reaktion zwischen Lithiumhydrid und Bortrifluorid springt manchmal nur verzögert an. Dies kann dadurch vermieden werden, dass vor der $BF_3$-Dosierung eine kleinere Menge Lithiumborhydrid vorgelegt wird. Bevorzugt kann das Lithiumborhydrid in einer Menge von 0,5 bis 10 Mol-% der später zuzugebenen Menge Bortrifluorid vorgelegt werden, besonders bevorzugt sind 3 bis 5 Mol-%. Das "Anspringen" der Umsetzung ist durch einen Anstieg der Innentemperatur zu erkennen. Auch durch Leitfähigkeitsmessungen kann der Reaktionsbeginn und -verlauf detektiert werden.

Nach Zugabeende des Bortrifluorids wird noch so lange nachgerührt, bis keine Reaktionswärme mehr freigesetzt wird, bzw. bis die Leitfähigkeit einen konstanten Wert erreicht hat. Die dafür benötigte Zeit ist von den spezifischen Reaktionsbedingungen (LiH-Überschuss, Partikelgrößenverteilung, Temperatur) abhängig. Im allgemeinen sind unter besonders bevorzugten Bedingungen, das heißt bei einem LiH-Überschuss von mindestens 5 oder 10 Mol-% und Innentemperaturen zwischen 30 und 70 °C, eine bis drei Stunden Nachrührzeit ausreichend bemessen. Die Reaktionstemperatur kann beim Einsatz von THF als Lösungsmittel ganz besonders bevorzugt zwischen 40 und 65 °C liegen.

Nach Reaktionsende wird filtriert; die festen Filterrückstände werden mit dem Lösungsmittel, optional im Gemisch mit dem Cosolvenz, gewaschen. Im Filtrat liegt das $LiBH_4$ in gelöster Form und in sehr reinem Zustand (zu zeigen durch $^{11}$B-NMR-Spektroskopie) vor.

Die Lithiumborhydridlösung kann als Reduktionsmittel für die organische Synthese (z. B. Reduktion von Esterfunktionen) oder als Quelle für gasförmigen Wasserstoff (z. B. für die Versorgung von Brennstoffzellen) verwendet werden.

Die Erfindung wird im folgenden anhand von Beispielen näher erläutert.

**Beispiel 1: Synthese von $LiBH_4$ in THF, Verhältnis LiH : $BF_3$ = 4,73 : 1**

In einem getrockneten und mit Argon inertisierten 0,5 l Doppelmantelreaktor, ausgestattet mit Rückflusskühler, Thermoelement, Leitfähigkeitsmesssonde, Tropftrichter und mit einem Gaswäscher (gefüllt mit 145 g Aceton), wurden 42,4 g (5,34 mol) gemahlenes Lithiumhydrid in 300 g THF vorgelegt. Nach Zugabe von 1,1 g festem Lithiumborhydrid wurde die Innentemperatur auf 53 °C erhöht und mit der Dosierung von $BF_3$ THF-Komplex (insgesamt 158,1 g = 1,13 mol) begonnen. Die Umsetzung begann fast unverzögert, was an der innerhalb von 5 Minuten erfolgten sprunghaften Erhöhung der Innentemperatur von 53 °C auf 59 °C und dem Leitfähigkeitsanstieg von 0,03 mS/cm auf 0,10 mS/cm erkennbar war. Zur besseren Wärmeabfuhr wurde die Manteltemperatur auf 45 °C heruntergeregelt. Das $BF_3$ THF wurde innerhalb von 90 Minuten zugegeben.

Nach Zugabeende glichen sich die Innen- und die Manteltemperatur innerhalb von 20 Minuten an. Zur Reaktionsvervollständigung wurde noch weitere 90 Minuten unter Rückfluss gekocht.

Die auf Raumtemperatur abgekühlte Reaktionsmischung wurde dann mittels einer Glasfritte klarfiltriert. Der Filterkuchen wurde mit 2 mal 100 ml THF gewaschen.

Erhalten wurden 390 g einer klaren, farblosen Lösung. Die Analyse ergab 2,70 mmol B pro g Lösung, 2,69 mmol Li /g, < 0,005 mmol F /g und 10,9 mmol $H^-$ /g. Dies sind 22,9 g $LiBH_4$ als 5,9 %-ige Lösung, was einer Ausbeute von 93 % der Theorie entspricht. Im $^{11}$B - NMR war ein Signal bei -41,3 ppm (99 % der Gesamtflächen, Hauptsignal von $LiBH_4$) und ein Signal bei -30 ppm (ca. 0,5 % der Gesamtflächen, Spuren eines Nebenproduktes) zu beobachten.

Im mit THF gefüllten Gaswäscher konnte kein Bor nachgewiesen werden (< 0,005 mmol/g)

**Vergleichsbeispiel A: Synthese von $LiBH_4$ in THF, Verhältnis LiH : $BF_3$ = 4,08 :1**

In derselben Apparatur wie im Beispiel 1 wurden 35,7 g (4,49 mol) gemahlenes Lithiumhydrid in 300 g THF vorgelegt. Nach Zugabe von 1,1 g festem Lithiumborhydrid wurde bei Innentemperaturen zwischen 45 °C und 60 °C innerhalb von 110 Minuten 153,9 g (1,10 mol) $BF_3$ THF-Komplex zugegeben. Nach Beendigung der Zugabe wurde 1,5 Stunden refluxiert. Dabei entwickelte sich lebhaft ein Gas, das durch den Gaswäscher geleitet wurde.

Nach dem Abkühlen wurde filtriert und mit 4 Portionen THF nachgewaschen. Erhalten wurden 422 g einer klaren, farblosen Lösung. Die Analyse ergab 1,59 mmol B pro g Lösung, 1,21 mmol Li /g, 0,01 mmol F /g und 6,1 mmol H- /g. Im $^{11}$B - NMR war ein breites Signal bei -41,3 ppm (ca. 68 % der Gesamtflächen, $LiBH_4$), ein breites Signal bei -25 ppm (ca. 20 % der Gesamtflächen, $LiB_2H_7$) und ein Signal bei -1 ppm (ca. 10 % der Gesamtflächen, $BH_3$) zu beobachten. Die Ausbeute an $LiBH_4$ betrug 46 % der Theorie. Das Produkt war stark mit $LiB_2H_7$ und $BH_3$ verunreinigt.

Im Gaswäscher wurde eine Borkonzentration von 1,7 mmol/g gefunden, was hochgerechnet auf die gesamte Lösungsmenge (Auswaage 212 g) einer in Form von Diboran verlorenen Ausbeute von knapp 33 % entspricht.

**Beispiel 2: Synthese von $LiBH_4$ in 1,2-Dimethoxyethan, Verhältnis LiH : $BF_3$ = 4,90:1**

In der in Beispiel 1 beschriebenen Apparatur wurden 25,4 g (3,19 mmol) gemahlenes Lithiumhydrid und 0,78 g festes Lithiumborhydrid in 267 g wasserfreiem 1,2-Dimethoxyethan suspendiert. Bei Innentemperaturen zwischen 47 und 52 °C wurden 92,3 g (0,65 mol) $BF_3$-Diethyletherkomplex innerhalb von 3 Stunden zudosiert. Nach Zugabeende wurde 4 Stunden bei 50 °C nachgerührt.

Nach Abkühlung auf Raumtemperatur wurde die Reaktionsmischung filtriert, und der Filterrückstand wurde 3 mal mit je 40 ml 1,2-Dimethoxyethan nachgewaschen. Erhalten wurden 292 g einer klaren, farblosen Lösung. Die Analyse ergab 1,60 mmol B pro g Lösung, 1,57 mmol Li /g und 6,39 mmol $H^-$ /g (F nicht bestimmt). Dies entspricht einer in Form der Lösung isolierten $LiBH_4$-Ausbeute von knapp 95 %.

In dem mit 46 g THF gefüllten Abgaswäscher wurden 0,035 mmol/g Bor gefunden, was einer in Form von $BH_3$ verlorenen Ausbeute von 0,2 % entspricht.

**Patentansprüche**

**1.** Verfahren zur Herstellung von Lithiumborhydrid durch Reaktion von Lithiumhydrid mit Bortrifluorid, **dadurch ge-**

**kennzeichnet, dass** Lithiumhydrid mit Bortrifluorid in einem Molverhältnis LiH : BF$_3$ > 4,1 : 1 umgesetzt wird, wobei die Umsetzung in einem etherischen Lösungsmittel, dessen Siedepunkt bei Normaldruck mindestens 50 °C beträgt, und bei Temperaturen von mindestens 10°C durchgeführt wird.

2. Verfahren nach Anspruch 2, **dadurch gekennzeichnet, dass** das Lithiumhydrid bevorzugt als Pulver mit einer mittleren Korngröße d$_{50}$ von maximal 0,5 mm eingesetzt wird.

3. Verfahren nach einem der Ansprüche 1 oder 2, **dadurch gekennzeichnet, dass** das Molverhältnis LiH : BF$_3$ > 4,2 : 1 beträgt.

4. Verfahren nach Anspruch 3, **dadurch gekennzeichnet, dass** das Molverhältnis LiH : BF$_3$ > 4,4 :1 beträgt.

5. Verfahren nach einem der Ansprüche 1 bis 4, **dadurch gekennzeichnet, dass** als etherisches Lösungsmittel 5- oder 6-gliedrige cyclische Monoether oder mehrfunktionelle Ether eingesetzt werden.

6. Verfahren nach Anspruch 5, **dadurch gekennzeichnet, dass** als etherisches Lösungsmittel Tetrahydrofuran (THF), 2-Methyltetrahydrofuran, Tetrahydropyran, 1,2-Dimethoxyethan oder 1,2-Diethoxyethan einzeln oder im Gemisch eingesetzt werden.

7. Verfahren nach einem der Ansprüche 1 bis 6, **dadurch gekennzeichnet, dass** neben dem etherischen Lösungsmittel ein oder mehrere Cosolvenzien mit einem maximalen Anteil von 50 Gew.-% des Lösungsmittelgemisches verwendet werden.

8. Verfahren nach Anspruch 7, **dadurch gekennzeichnet, dass** als Cosolvenzien Kohlenwasserstoffe eingesetzt werden.

9. Verfahren nach einem der Ansprüche 1 bis 8, **dadurch gekennzeichnet, dass** die Reaktionstemperatur zwischen 30 und 70 °C liegt.

10. Verfahren nach einem der Ansprüche 1 bis 9, **dadurch gekennzeichnet, dass** die Reaktion bei Normaldruck oder bei einem leichten Überdruck von bis zu 100 mbar durchgeführt wird.

11. Verfahren nach einem der Ansprüche 1 bis 10, **dadurch gekennzeichnet, dass** zum Anspringen der Reaktion Lithiumborhydrid in einer Menge von 0,5 bis 10 Mol-% der später zuzugebenden Menge Bortrifluorid vorgelegt wird.

12. Verwendung des nach einem Verfahren gemäß der Ansprüche 1 bis 11 hergestellten Lithiumborhydrids für die organische Synthese oder als Quelle für gasförmigen Wasserstoff.

**Europäisches Patentamt**

# EUROPÄISCHER RECHERCHENBERICHT

Nummer der Anmeldung

EP 04 00 0966

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2 532 217 A (WINTERNITZ PAUL F) 28. November 1950 (1950-11-28) * das ganze Dokument * | 1-8, 10-12 | C01B6/21 |
| D,X | J.R. ELLIOT, E.M BOLDEBUCK AND G.F. ROEDEL: "Preparation of diborane from lithium hydride and boron trihalide ether complexes" JOURNAL OF THE AMERICAN CHEMICAL SOCIETY, Bd. 74, 20. Oktober 1952 (1952-10-20), Seiten 5047-5052, XP001189728 ISSN: 0002-7863 * Tabelle IV * * Seite 5049 - Seite 5050 * | 1-12 | |
| X | DE 944 546 C (HEYL & CO) 21. Juni 1956 (1956-06-21) * das ganze Dokument * | 1-12 | |
| X | CH 307 621 A (HEYL & CO) 15. Juni 1955 (1955-06-15) * das ganze Dokument * | 1-12 | RECHERCHIERTE SACHGEBIETE (Int.Cl.7) |
| D,A | E.M. FEDNEVA : "The influence of temperature on the reaction of lithium hydride with boron trifluoride etherate" RUSSIAN JOURNAL OF INORGANIC CHEMISTRY, Bd. 4, Nr. 2, Februar 1959 (1959-02), Seiten 124-125, XP008029442 CHEMICAL SOCIETY, LONDON., GB ISSN: 0036-0236 * Seite 125 * * Tabelle 1 * | | C01B |

-/--

Der vorliegende Recherchenbericht wurde für alle Patentansprüche erstellt

| Recherchenort | Abschlußdatum der Recherche | Prüfer |
|---|---|---|
| DEN HAAG | 5. April 2004 | Zuurdeeg, B |

# EP 1 440 934 A1

**Europäisches Patentamt**

## EUROPÄISCHER RECHERCHENBERICHT

Nummer der Anmeldung

EP 04 00 0966

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | J.R. ELLIOT, W.L. ROTH, G.F. ROEDEL AND E.M. BOLDEBUCK: "Solubility of diborane- and boron-containing lithium salts" JOURNAL OF THE AMERICAN CHEMICAL SOCIETY, Bd. 74, 20. Oktober 1952 (1952-10-20), Seiten 5211-5212, XP001189729 ISSN: 0002-7863 * Tabelle V * ----- | | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 5. April 2004 | Zuurdeeg, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie,übereinstimmendes Dokument

**Europäisches**

**Patentamt**

**Nummer der Anmeldung**

EP 04 00 0966

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vor- liegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vor- liegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches**
**Patentamt**

**MANGELNDE EINHEITLICHKEIT**
**DER ERFINDUNG**
**ERGÄNZUNGSBLATT B**

Nummer der Anmeldung

EP 04 00 0966

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11

   Verfahren zur Herstellung von Lithiumborhydrid

2. Anspruch : 12

   Verwendung des Lithiumborhydrids

**ANHANG ZUM EUROPÄISCHEN RECHERCHENBERICHT**
**ÜBER DIE EUROPÄISCHE PATENTANMELDUNG NR.**           EP 04 00 0966

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2004

| Im Recherchenbericht angeführtes Patentdokument | | Datum der Veröffentlichung | Mitglied(er) der Patentfamilie | Datum der Veröffentlichung |
|---|---|---|---|---|
| US 2532217 | A | 28-11-1950 | KEINE | |
| DE 944546 | C | 21-06-1956 | KEINE | |
| CH 307621 | A | 15-06-1955 | KEINE | |

Für nähere Einzelheiten zu diesem Anhang : siehe Amtsblatt des Europäischen Patentamts, Nr.12/82